# EUROPEAN PATENT APPLICATION

(11) **EP 3 174 364 A1**
(43) Date of publication of application: **31.05.2017**
(21) Application number: 16201208.2
(22) Date of filing: 29.11.2016
(51) Int. Cl.: H04W 84/12, H04W 88/12, H04W 36/00

(54) **ROAMING PROCESSING METHOD AND APPARATUS**

(30) Priority: 30.11.2015 CN 201510864124
(71) Applicant: Huawei Technologies Co., Ltd., Longgang District Shenzhen, Guangdong 518129 (CN)
(72) Inventor: Lin, Yunyun, Shenzhen, Guangdong 518129 (CN)
(74) Representative: Epping - Hermann - Fischer

(57) **Abstract**

Embodiments of the present invention disclose a roaming processing method and apparatus. According to the roaming processing method, a wireless local area network controller maintains a roaming neighbor list, for multiple access points according to a roaming behavior of at least one terminal, where the multiple access points include a first access point and a second access point, and in the roaming neighbor list, the second access point is a neighbor of the first access point; and when a first terminal is connected to the first access point, the wireless local area network controller sends connection data of the first terminal to the second access point. It can be seen that, in the embodiments of the present invention, connection data of a terminal may be sent to a neighbor of an access point when the terminal is connected to the access point. This avoids that acquisition of the connection data of the terminal is triggered only when the terminal roams to the neighbor of the access point, thereby shortening a roaming processing time and improving roaming smoothness.

## Description

### TECHNICAL FIELD

The present invention relates to the field of communications technologies, and in particular, to a roaming processing method and apparatus.

### BACKGROUND

One of advantages of a wireless local area network (English: wireless local area network, WLAN for short) over a wired network is support for terminal mobility. When a terminal moves between coverage areas of different access points (English: access point, AP for short) on a WLAN, to prevent a terminal service from being interrupted, roaming of the terminal between the APs needs to be ensured. There are a large quantity of APs on some large-scale WLAN networks, and multiple wireless local area network controllers are required to manage the large quantity of APs. When a terminal sends an association request to a roam-to AP, the roam-to AP sends the association request to a home AC of the AP. When the AC determines, according to an identifier of the terminal, that the terminal is a roaming terminal, the AC may search for a home AC of an AP associated before roaming, to obtain connection data of the terminal from the home AC and send the data to the roam-to AP. The roam-to AP provides the terminal with an access network service. In this way, roaming processing is completed. The foregoing roaming processing operation is triggered only during terminal roaming, and roaming is completed only after an AC performs a series of operations. This results in an excessively long roaming processing time and affects roaming smoothness.

### SUMMARY

This application discloses a roaming processing method and apparatus, which can shorten a roaming processing time and improve roaming smoothness.

A first aspect discloses a roaming processing method. In the method, a wireless local area network controller maintains a roaming neighbor list, for multiple access points according to a roaming behavior of at least one terminal, where the multiple access points include a first access point and a second access point, and in the roaming neighbor list, the second access point is a neighbor of the first access point; and the wireless local area network controller sends connection data of a first terminal to the second access point when the first terminal is connected to the first access point.

A wireless local area network controller maintains a roaming neighbor list, for multiple access points, and may send connection data of a terminal to a neighbor of an access point when the terminal is connected to the access point, so that the neighbor of the access point can directly use the connection data to provide the terminal with a network access service when the terminal roams to the neighbor of the access point. This avoids that the wireless local area network controller is triggered to obtain the connection data of the terminal only when the terminal roams to the neighbor of the access point, thereby shortening a roaming processing time and improving roaming smoothness.

According to the first aspect, in a first implementation of the first aspect, the multiple access points further include a third access point, and in the roaming neighbor list, the third access point is not a neighbor of the first access point; and the roaming processing method further includes: setting, by the wireless local area network controller, the third access point in the roaming neighbor list as a neighbor of the first access point when a second terminal roams from the first access point to the third access point.

In this implementation, the wireless local area network controller may automatically learn between which access points a roaming relationship has taken place for the first time, update content of the roaming neighbor list according to the newly learned roaming relationship, for example, when the second terminal roams from the first access point to the third access point, and set the third access point in the roaming neighbor list as a neighbor of the first access point. According to the first implementation of the first aspect, in a second implementation of the first aspect, the roaming processing method further includes: sending, by the wireless local area network controller, connection data of a terminal connected to the first access point to the third access point when the second terminal roams from the first access point to the third access point. In this implementation, the wireless local area network controller may send connection data of a terminal connected to an access point to a newly learned neighbor access point. For example, the wireless local area network controller sends the connection data of the terminal connected to the first access point to the third access point.

According to the first implementation of the first aspect or the second implementation of the first aspect, in a third implementation of the first aspect, the roaming processing method further includes: sending, by the wireless local area network controller, connection data of a terminal connected to the third access point to the first access point when the second terminal roams from the first access point to the third access point.

In this implementation, if a neighbor relationship is bidirectional, when a terminal roams from the first access point to the third access point for the first time, the third access point becomes a new neighbor of the first access point, and the first access point is also a new neighbor of the third access point. To improve roaming smoothness, the wireless local area network controller may also send the connection data of the terminal connected to the third access point to the first access point.

According to any one of the first aspect and the first to the third implementations of the first aspect, in a fourth implementation of the first aspect, the roaming neighbor list further includes an update time of a neighbor relationship between the multiple access points, and the roaming processing method further includes: aging, by the wireless local area network controller according to the update time, a neighbor relationship not updated for a long time.

This implementation may prevent the wireless local area network controller from maintaining an excessively large roaming neighbor list, with an aged neighbor relationship removed in a timely manner.

According to any one of the first aspect and the first to the fourth implementations of the first aspect, in a fifth implementation of the first aspect, the multiple access points further include a fourth access point, where in the roaming neighbor list, the fourth access point is a neighbor of the first access point; the wireless local area network controller further maintains a connection database, where the connection database includes terminal connection data stored in each access point of the multiple access points; and the roaming processing method further includes: when the first terminal is connected to the first access pint, determining, by the wireless local area network controller according to the connection database, whether the fourth access point has stored the connection data of the first terminal, skipping sending, by the wireless local area network controller, the connection data of the first terminal to the fourth access point when the fourth access point has stored the connection data of the first terminal, and sending, by the wireless local area network controller, the connection data of the first terminal to the fourth access point when the fourth access point has not stored the connection data of the first terminal. In this implementation, data of some terminals can be prevented from being repeatedly sent to a neighbor access point of the first access point, saving network bandwidth or reducing traffic.

A second aspect further discloses a roaming processing apparatus, where the roaming processing apparatus may include a unit executing the roaming processing method disclosed in the first aspect. Optionally, in an implementation disclosed in the second aspect, the roaming processing apparatus may include: a maintenance unit, configured to maintain a roaming neighbor list, for multiple access points according to a roaming behavior of at least one terminal, where the multiple access points include a first access point and a second access point, and in the roaming neighbor list, the second access point is a neighbor of the first access point; and a communications unit, configured to send connection data of a first terminal to the second access point when the first terminal is connected to the first access point.

A third aspect further discloses a wireless local area network controller. The wireless local area network controller includes a memory, a communications interface, and a processor, where the communications interface is configured to connected to multiple access points; the memory is configured to store a roaming neighbor list maintained by the processor for the multiple access points; and the processor is configured to maintain the roaming neighbor list, for the multiple access points according to a roaming behavior of at least one terminal; where the multiple access points include a first access point and a second access point, and in the roaming neighbor list, the second access point is a neighbor of the first access point, and the processor is further configured to send connection data of a first terminal to the second access point through the communications interface when the first terminal is connected to the first access point. The processor may further execute the operation of any implementation or multiple implementations of the roaming processing method disclosed in the first aspect.

In this application, a wireless local area network controller or a roaming processing apparatus maintains a roaming neighbor list, for multiple access points, and sends connection data of a terminal to a neighbor of an access point when the terminal is connected to the access point, so that the connection data may be directly used for a network connection when the terminal roams to the neighbor of the access point. This avoids that the wireless local area network controller is triggered to obtain the connection data of the terminal only when the terminal roams to the neighbor of the access point, thereby shortening a roaming processing time and improving roaming smoothness.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a schematic flowchart of a roaming processing method disclosed in an embodiment of the present invention;
FIG. 2 is a schematic flowchart of another roaming processing method disclosed in an embodiment of the present invention;
FIG. 3 is a schematic flowchart of still another roaming processing method disclosed in an embodiment of the present invention;
FIG. 4 is a schematic structural diagram of a roaming processing apparatus disclosed in an embodiment of the present invention;
FIG. 5 is a schematic structural diagram of a wireless local area network controller disclosed in an embodiment of the present invention; and
FIG. 6 is a schematic diagram of a roaming scenario disclosed in an embodiment of the present invention.

### DESCRIPTION OF EMBODIMENTS

The embodiments of the present invention disclose a roaming processing method and apparatus that can shorten a roaming processing time and improve roaming smoothness. For better understanding of the embodiments of the present invention, the following first describes an application scenario of the embodiments of the present invention.

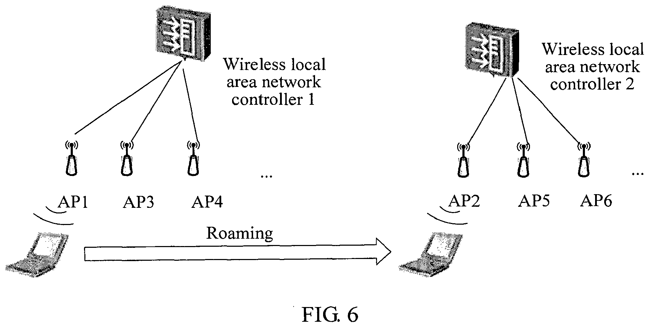

Referring to FIG. 6, FIG. 6 is a schematic diagram of a terminal roaming scenario in a wireless local area network, disclosed in an embodiment of the present invention. The wireless local area network shown in FIG. 6 may include multiple access points managed by multiple wireless local area network controllers. For example, an access point AP1 is managed by a wireless local area network controller 1, and an access point AP2 may be managed by a wireless local area network controller 2. Optionally, the wireless local area network controller 1 may further manage multiple access points, for example, an access point AP3 and an access point A4; and the wireless local area network controller 2 may also manage multiple access points, for example, an access point AP5 and an access point AP6. A terminal may roam between multiple access points managed by a same wireless local area network controller, or roam between access points managed by different wireless local area network controllers. The roaming between multiple access points managed by a same wireless local area network controller may be referred to as roaming within a wireless local area network controller. The roaming between multiple access points managed by different wireless local area network controllers may be referred to as roaming across wireless local area network controllers. FIG. 6 uses roaming across wireless local area network controllers as an example. When a terminal roams from the access point AP1 to the access point AP2, connection data of the terminal needs to be obtained by means of a roaming processing process, so that the access point AP2 provides the terminal with a network access service according to the connection data. This roaming processing process may use a roaming processing method described in the following.

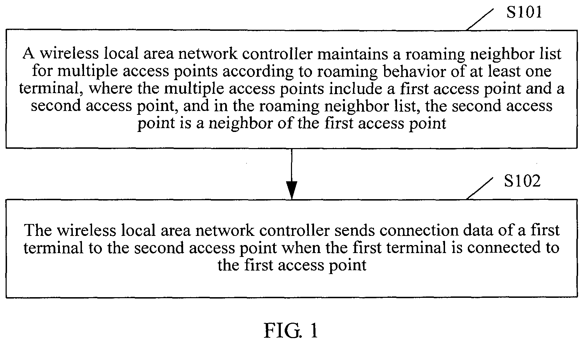

Referring to FIG. 1, FIG. 1 is a schematic flowchart of a roaming processing method disclosed in an embodiment of the present invention. In the roaming processing method, a wireless local area network controller may manage multiple access points. As shown in FIG. 1, the roaming processing method may include the following steps:
S101: A wireless local area network controller maintains a roaming neighbor list, for multiple access points according to a roaming behavior of at least one terminal, where the multiple access points include a first access point and a second access point, and in the roaming neighbor list, the second access point is a neighbor of the first access point.
S102: The wireless local area network controller sends connection data of a first terminal to the second access point when the first terminal is connected to the first access point.

That a terminal is connected to an access point may mean that the terminal is associated with the access point. If a WLAN requires an authentication operation to be performed on a user name and a password, or the like, that a terminal is connected to an access point may also mean that the terminal is connected to the access point and is authenticated.

That the second access point is a neighbor of the first access point in the roaming neighbor list indicates that a terminal roaming behavior has taken place at least once between the first access point and the second access point. A roaming behavior of a terminal refers to a behavior that a terminal roams from an access point to another access point. A neighbor relationship with another access point is set in the same way, for example, if there is a third access point around the first access point. In this embodiment of the present invention, a neighbor relationship between access points is not determined by physical positions. Therefore, initially the third access point was not a neighbor of the first access point, in the roaming neighbor list. Later, if a terminal, a second terminal for example, roams from the first access point to the third access point, the wireless local area network controller sets the third access point in the roaming neighbor list as a neighbor of the first access point.

The foregoing neighbor relationship is not transitive. For example, the second access point is a neighbor of the first access point, and the third access point is also a neighbor of the first access point, but the second access point is not a neighbor of the third access point, and the third access point is not a neighbor of the second access point either, unless terminal roaming has taken place between the second access point and the third access point. Two adjacent access points may be managed by a same wireless local area network controller, or be managed by different wireless local area network controllers.

A neighbor relationship between two access points in a roaming neighbor list may be unidirectional or bidirectional. Access points are generally fixedly deployed, but terminal roaming does not always take place between access points that are physically adjacent. For example, two access points are near in distance, but are separated by a guardrail in between. A user carrying a terminal cannot cross the guardrail, and therefore no terminal may roam between the two access points. This application defines a neighbor relationship between access points according to a terminal roaming behavior, that is, two access points between which a terminal roaming behavior has taken place are recorded as neighbors by a wireless local area network controller. A neighbor relationship may be bidirectional or unidirectional. A bidirectional neighbor relationship indicates that AP2 is also a neighbor of AP1 if AP1 is a neighbor of AP2. If a neighbor relationship is unidirectional, that AP1 is a neighbor of AP2 does not indicate that AP2 is a neighbor of AP1. In most scenarios, as long as there is a user-available path between two APs, a user may move freely on the path. Therefore, once one terminal roams from AP1 to AP2, it indicates a possibility that the terminal or another terminal roams between AP1 and AP2 in a bidirectional mode. In these scenarios, the wireless local area network controller may record a bidirectional neighbor relationship. For example, (AP1, AP2) is used to represent a bidirectional neighbor relationship between AP1 and AP2, that is, AP1 is a neighbor of AP2 and AP2 is a neighbor of AP1. In some scenarios, a path between two APs may be unidirectional. For example, in some conference places, there is a dedicated exit and a dedicated entrance, and a participant can only get in from the entrance and leave from the exit. In these scenarios, the wireless local area network controller may record a unidirectional neighbor relationship. For example, AP1->AP2 represents a unidirectional neighbor relationship from AP1 to AP2, that is, AP2 is a neighbor of AP1 but AP1 is not a neighbor of AP2.

If the first access point has multiple neighbors, the multiple neighbors are access points that the first terminal may roam to in future. Therefore, the wireless local area network controller sends connection data of the first terminal to these neighbors. Although the first terminal may roam to only one of the multiple neighbors or may not roam at all, sending connection data to a prospective roaming target of a terminal can improve roaming smoothness. It is worth consuming some more space of a memory, of an access point, used to store connection data. In another perspective, if connection data of all terminals is sent to all access points, although roaming smoothness can also be improved, an amount of connection data increases linearly with a total quantity of terminals on a network and the costs are excessively high.

When sending connection data of a terminal, the wireless local area network controller may send the connection data of the terminal only to an access point lacking the connection data of the terminal to reduce occupation of network resources. To determine whether an access point has already stored connection data of a terminal, the wireless local area network controller further maintains a connection database, and the connection database includes terminal connection data stored in each access point. Before sending connection data of the first terminal to the second access point, the wireless local area network controller may first determine that the second access point has not stored the connection data of the first terminal yet and then send the connection data of the first terminal to the second access point; otherwise, the wireless local area network controller does not send the connection data of the first terminal to the second access point. For example, the multiple access points further include a fourth access point, and in the roaming neighbor list, the fourth access point is a neighbor of the first access point. The first terminal is first connected to the fourth access point, and at that time the fourth access point has already obtained the connection data of the first terminal. Then, the first terminal roams to the first access point. When the first terminal is connected to the first access point, the wireless local area network controller determines that the fourth access point has already stored the connection data of the first terminal, and therefore the wireless local area network controller does not send the connection data of the first terminal to the fourth access point. However, if the first terminal being connected to the first access point is the first time that the first terminal is connected to the wireless local area network, the fourth access point has not stored the connection data of the first terminal yet. Therefore, the wireless local area network controller sends the connection data of the first terminal to the fourth access point.

Optionally, the wireless local area network controller updates connection data at an access point when connection data of a terminal in the connection database changes. The wireless local area network controller may send changed connection data of the terminal, or send a changed portion of the connection data, to an access point that has stored original connection data of the terminal. Connection data of a terminal includes authentication information, authorization information, quality of service (English: quality of service, QOS for short) information, and the like of the terminal. The authorization information mainly includes an access permission of the terminal, for example, which addresses are accessible and which addresses are not accessible. The QOS information includes bandwidth, a priority, and the like. After the wireless local area network controller sends the connection data of the first terminal to the second access point, the second access point may store the connection data of the first terminal. When the first terminal roams from the first access point to the second access point, the second access point may determine a forwarding policy for the terminal directly according to the connection data of the first terminal, for example, whether to forward some traffic of the terminal, bandwidth allocated to a user, and a forwarding priority.

Optionally, the connection data may further include one or more of the following items: an access point associated with the first terminal before roaming, a wireless local area network controller of the access point, a home agent, and the like. The home agent is a network server, and the first terminal is allowed to establish, by using the network server, a non-direct connection with a gateway of a network connected for the first time. The second access point may further create a roaming forwarding tunnel for the first terminal and sets the tunnel to a standby state. When an association request of the first terminal is received, the state of the roaming forwarding tunnel is changed into an active state, and data is forwarded for the first terminal by using the roaming forwarding tunnel.

The roaming neighbor list may further include an update time of all neighbor relationships between the multiple access points. The wireless local area network controller ages a neighbor relationship not updated for a long time, to adapt to a change in regularity of user movements. For example, setting up or removing a guardrail may change a movement mode of a user carrying a terminal. The wireless local area network controller may record an update time of a neighbor relationship. For example, the wireless local area network controller may record duration in which no terminal roaming behavior takes place between access points, or the wireless local area network controller may record time when the last terminal roaming behavior takes place between access points. A difference between current time and the time when the last terminal roaming behavior takes place between the access points is the duration in which no terminal roaming behavior takes place between the access points. If no terminal roaming behavior has taken place between two access points for a long time, the wireless local area network controller may cancel a neighbor relationship between the two access points. The wireless local area network controller may set a time threshold; and when duration in which no terminal roaming behavior takes place between access points exceeds the time threshold, the wireless local area network controller cancels a neighbor relationship between the access points between which no terminal roaming behavior has taken place for a long time. The foregoing time threshold may be static or dynamic. For example, the foregoing time threshold may be short at day time and long at night time.

According to the embodiment of the present invention, before a terminal roams to a neighbor access point of a current access point, connection data of the terminal is sent to the neighbor access point, so that the neighbor access point may directly use the connection data to connect the terminal to a network when the terminal roams to the neighbor access point. This method avoids that a wireless local area network controller is triggered to obtain the connection data of the terminal only when the terminal roams to the neighbor access point, thereby shortening a roaming processing time and improving roaming smoothness.

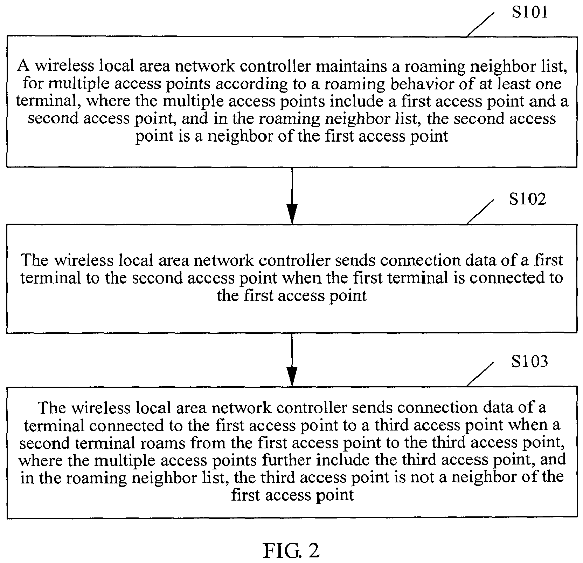

Referring to FIG. 2, FIG. 2 is a schematic flowchart of another roaming processing method disclosed in an embodiment of the present invention, where the roaming processing method shown in FIG. 2 may further include the following steps in addition to step S101 and step S102 shown in FIG. 1:
S103: The wireless local area network controller sends connection data of a terminal connected to the first access point to a third access point when a second terminal roams from the first access point to the third access point, where the multiple access points further include the third access point, and in the roaming neighbor list, the third access point is not a neighbor of the first access point.

When a terminal roams from the first access point to the third access point for the first time, the third access point becomes a new neighbor of the first access point. Therefore, the third access point becomes a prospective roaming target of a terminal connected to the first access point, that is, a terminal connected to the first access point may roam from the first access point to the third access point. To improve roaming smoothness, the wireless local area network controller sends connection data of a terminal connected to the first access point to the third access point. A terminal connected to the first access point is a terminal being connected to the first access point, other than the second terminal, when the second terminal roams from the first access point to the third access point.

If a neighbor relationship is bidirectional, when a terminal roams from the first access point to the third access point for the first time, the first access point also becomes a new neighbor of the third access point. Therefore, the first access point also becomes a prospective roaming target of a terminal connected to the third access point. To improve roaming smoothness, the wireless local area network controller may also send connection data of a terminal connected to the third access point to the first access point.

If the wireless local area network controller maintains a connection database, when sending the connection data of the terminal connected to the third access point to the first access point, the wireless local area network controller may send terminal connection data that is not stored in the first access point and that is in the connection data of the terminal connected to the third access point to the first access point.

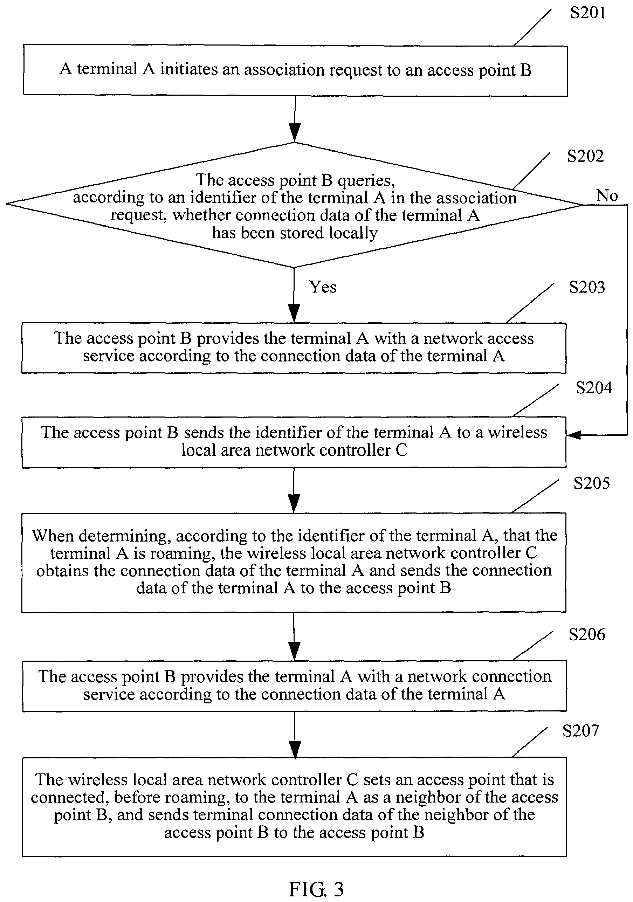

Referring to FIG. 3, FIG. 3 is a schematic flowchart of still another roaming processing method disclosed in an embodiment of the present invention. The roaming processing method shown in FIG. 3 is described based on interaction between a terminal A, an access point B, and a home wireless local area network controller C of the access point B. Specifically, the roaming processing method may include the following steps:
S201: The terminal A initiates an association request to the access point B.
   The association request includes an identifier such as a physical address of the terminal A.
S202: The access point B queries, according to an identifier of the terminal A in the association request, whether connection data of the terminal A has been stored locally, and executes step S203 if the connection data of the terminal A has been stored or executes step S204 otherwise. S203: The access point B provides the terminal A with a network access service according to the connection data of the terminal A.
   Optionally, the access point B may create a forwarding entry for the terminal A according to the connection data of the terminal A. If determining, according to an access point associated when the terminal is connected to a network for the first time, that is, a home (English: home) access point, that the roaming is Layer 3 roaming, the access point B may switch a roaming tunnel between the access point B and a home agent in the connection data of the terminal A to an active state. In addition, the access point B sends an Address Resolution Protocol (English: Address Resolution Protocol, ARP) packet for the terminal A in a case in which an IP address of the terminal A is already known, or sends a Reverse Address Resolution Protocol (Reverse Address Resolution Protocol, RARP) packet for the terminal A in a case in which the IP address of the terminal A is not known. The packet is forwarded to the home agent by using the new active roaming tunnel, and the home agent switches a roaming tunnel to the access point B according to a source port of the packet received. In this way, data forwarding is implemented for the terminal A.
S204: The access point B sends the identifier of the terminal A to a wireless local area network controller C.
   The access point B may separately send the identifier of the terminal A in the association request to the wireless local area network controller; or forward the association request that includes the identifier of the terminal A, where the wireless local area network controller C extracts the identifier of the terminal A form the association request.
S205: When determining, according to the identifier of the terminal A, that the terminal A is roaming, the wireless local area network controller C obtains the connection data of the terminal A and sends the connection data of the terminal A to the access point B.
S206: The access point B provides the terminal A with a network access service according to the connection data of the terminal A.
S207: The wireless local area network controller C sets an access point that is connected, before roaming, to the terminal A as a neighbor of the access point B, and sends terminal connection data of the neighbor of the access point B to the access point B.

According to the roaming processing method shown in FIG. 3, if an access point B has stored connection data of a terminal A, a network access service is directly provided for the terminal A; if the access point B has not stored the connection data of the terminal A, the terminal A is connected to a network by using steps S204 to 206. Further, in step S207, when the access point B has not stored the connection data of the terminal A and the terminal A is roaming, a wireless local area network controller C may discover a new neighbor relationship and set an access point that is connected, before roaming, to the terminal A as a neighbor of the access point B, thereby synchronizing connection data of a prospective roaming terminal in advance.

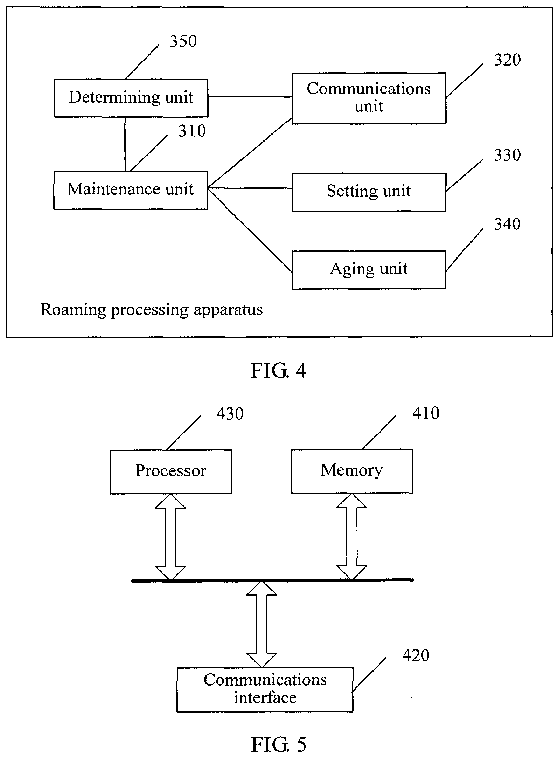

Referring to FIG. 4, FIG. 4 is a schematic structural diagram of a roaming processing apparatus disclosed in an embodiment of the present invention. The roaming processing apparatus may include a maintenance unit 310 and a communications unit 320, where:
the maintenance unit 310 is configured to maintain a roaming neighbor list, for multiple access points according to a roaming behavior of at least one terminal, where the multiple access points include a first access point and a second access point, and
in the roaming neighbor list, the second access point is a neighbor of the first access point; and
the communications unit 320 is configured to send connection data of a first terminal
to a second access point when the first terminal is connected to the first access point.

Optionally, the multiple access points further include a third access point, and in the roaming neighbor list, the third access point is not a neighbor of the first access point. The roaming processing apparatus further includes a setting unit 330. The setting unit 330 is configured to, when a second terminal roams from the first access point to the third access point, set the third access point in the roaming neighbor list as a neighbor of the first access point.

Optionally, the communications unit is further configured to, when the first access point roams to the third access point, send connection data of a terminal connected to the first access point to the third access point.

Optionally, the roaming neighbor list further includes an update time of a neighbor relationship between the multiple access points, and the roaming processing apparatus further includes an aging unit 340. The aging unit 340 is configured to age, according to the update time of the neighbor relationship between the multiple access points in the roaming neighbor list, a neighbor relationship not updated for a long time.

Optionally, the multiple access points further include a fourth access point, and in the roaming neighbor list, the fourth access point is a neighbor of the first access point. The roaming processing apparatus further maintains a connection database, and the connection database includes terminal connection data stored in each access point of the multiple access points. The roaming processing apparatus may further include a determining unit 350. The determining unit 350 is configured to: when the first terminal is connected to the first access point, determine, according to the connection database, whether the fourth access point has stored the connection data of the first terminal. Correspondingly, the communications unit 320 is further configured to skip sending the connection data of the first terminal to the fourth access point when determining that the fourth access point has stored the connection data of the first terminal, or send the connection data of the first terminal to the fourth access point when determining that the fourth access point has not stored the connection data of the first terminal.

The maintenance unit 310 may execute the operation of step S101 according to the roaming processing method shown in FIG. 1, and a corresponding implementation of step S101. The communications unit 320 may execute the operation of step S102 and a corresponding implementation according to the roaming processing method shown in FIG. 1 and execute the operation of step S103 and a corresponding implementation according to the roaming processing method shown in FIG. 2. In addition, the units in the apparatus in this embodiment of the present invention may be combined, divided, or removed according to actual needs, which is not limited by this embodiment of the present invention.

Referring to FIG. 5, FIG. 5 is a schematic structural diagram of a wireless local area network controller disclosed in an embodiment of the present invention. The wireless local area network controller may be a network device such as a router or a network switch. As shown in FIG. 5, the wireless local area network controller may include a memory 410, a communications interface 420, and a processor 430, where the communications interface 420 is configured to connect to multiple access points and the memory 430 is configured to store a roaming neighbor list maintained by the processor 410 for the multiple access points.

The communications interface 420 may be a wired communications interface, a wireless communications interface, or a combination thereof, where the wired communications interface may be, for example, an Ethernet interface. The Ethernet interface may be an optical interface, an electrical interface, or a combination thereof. The wireless communications interface may be a WLAN interface, a cellular network communications interface, or a combination thereof. The memory 410 may include a volatile memory (English: volatile memory) such as a random access memory (English: random-access memory, RAM for short); or the memory 410 may include a non-volatile memory (English: non-volatile memory) such as a flash memory (English: flash memory), a hard disk drive (English: hard disk drive, HDD for short) or a solid-state drive (English: solid-state drive, SSD for short); or the memory 410 may include a combination of the foregoing types of memories. The processor 430 may be a central processing unit (English: central processing unit, CPU for short), a network processor (English: network processor, NP for short), or a combination of a CPU and an NP. The processor 430 may further include a hardware chip. The foregoing hardware chip may be an application-specific integrated circuit (English: application-specific integrated circuit, ASIC for short), a programmable logic device (English: programmable logic device, PLD for short), or a combination thereof. The foregoing PLD may be a complex programmable logic device (English: complex programmable logic device, CPLD for short), a field-programmable logic gate array (English: field-programmable gate array, FPGA for short), a generic array logic (English: generic array logic, GAL for short), or any combination thereof.

In this embodiment of the present invention, the processor 430 is configured to maintain the roaming neighbor list, for the multiple access points according to a roaming behavior of at least one terminal, the roaming neighbor list is stored by the memory 410, the multiple access points include a first access point and a second access point, and in the roaming neighbor table, the second access point is a neighbor of the first access point; and
when a first terminal is connected to the first access point, connection data of the first terminal is sent to the second access point by using the communications interface 420.

Optionally, the multiple access points further include a third access point, and in the roaming neighbor list, the third access point is not a neighbor of the first access point; and the processor 430 is further configured to set the third access point in the roaming neighbor list as a neighbor of the first access point when a second terminal roams from the first access point to the third access point.

Optionally, the processor 430 is further configured to send connection data of a terminal connected to the first access point to the third access point when the second terminal roams from the first access point to the third access point.

Optionally, the roaming neighbor list further includes an update time of a neighbor relationship between the multiple access points, and the processor 430 is configured to age, according to the update time of the neighbor relationship between the multiple access points in the roaming neighbor list, a neighbor relationship not updated for a long time.

Optionally, the multiple access points further include a fourth access point, and in the roaming neighbor list, the fourth access point is a neighbor of the first access point. The wireless local area network controller further maintains a connection database, and the connection database includes terminal connection data stored in each access point of the multiple access points. The processor 430 is further configured to: when the first terminal is connected to the first access point, determine whether the fourth access point has stored the connection data of the first terminal. The processor 430 skips sending the connection data of the first terminal to the fourth access point when the fourth access point has stored the connection data of the first terminal; and the processor 430 sends the connection data of the first terminal to the fourth access point when the fourth access point has not stored the connection data of the first terminal.

By calling a program instruction stored in the memory 410 by using the communications interface 420, the processor 430 may execute one or more steps in the embodiments shown in FIG. 1 to FIG. 3 or execute an optional implementation thereof.

Persons of ordinary skill in the art may understand that all or some of the steps in the methods in the foregoing embodiments may be implemented by a program instructing related hardware. The program may be stored in a computer readable storage medium. The storage medium may include: a flash drive, a read-only memory (English: read-only memory, ROM), a flash memory, a hard disk drive, a solid-state drive, a magnetic tape (English: magnetic tape), a floppy disk (English: floppy disk), an optical disc, or any combination thereof.

The foregoing details a roaming processing method and apparatus disclosed in the embodiments of the present invention. In this specification, specific examples are used to illustrate implementations of the present invention, and the foregoing description of the embodiments is merely intended to help understand the method of the present invention. In addition, any modification made to the specific implementations or the application scope by a person of ordinary skill in the art within the technical scope disclosed in the present invention shall fall within the protection scope of the present invention. In conclusion, content of this specification shall not be construed as limitations on the present invention.

## Claims

1. A roaming processing method, comprising:
maintaining, by a wireless local area network controller, a roaming neighbor list, for multiple access points according to a roaming behavior of at least one terminal, wherein the multiple access points comprise a first access point and a second access point, and in the roaming neighbor list, the second access point is a neighbor of the first access point; and
sending, by the wireless local area network controller, connection data of a first terminal to the second access point when the first terminal is connected to the first access point.

2. The method according to claim 1, wherein the multiple access points further comprise a third access point, and in the roaming neighbor list, the third access point is not a neighbor of the first access point; and the method further comprises:
setting, by the wireless local area network controller, the third access point in the roaming neighbor list as a neighbor of the first access point when a second terminal roams from the first access point to the third access point.

3. The method according to claim 2, wherein the method further comprises:
sending, by the wireless local area network controller, connection data of a terminal connected to the first access point to the third access point when the second terminal roams from the first access point to the third access point.

4. The method according to any one of claims 1 to 3, wherein the roaming neighbor list further comprises an update time of each neighbor relationship between the multiple access points, and the method further comprises:
aging, by the wireless local area network controller according to the update time, a neighbor relationship not updated for a long time.

5. The method according to any one of claims 1 to 4, wherein the multiple access points further comprise a fourth access point, wherein in the roaming neighbor list, the fourth access point is a neighbor of the first access point; the wireless local area network controller further maintains a connection database, wherein the connection database further comprises terminal connection data stored in each access point of the multiple access points; and the method further comprises:
when the first terminal is connected to the first access point, determining, by the wireless local area network controller according to the connection database, whether the fourth access point has stored the connection data of the first terminal;
skipping sending, by the wireless local area network controller, the connection data of the first terminal to the fourth access point when the fourth access point has stored connection data of the first terminal; and
sending, by the wireless local area network controller, the connection data of the first terminal to the fourth access point when the fourth access point has not stored the connection data of the first terminal.

6. A roaming processing apparatus, comprising:
a maintenance unit, configured to maintain a roaming neighbor list, for multiple access points according to a roaming behavior of at least one terminal, wherein the multiple access points comprise a first access point and a second access point, and in the roaming neighbor list, the second access point is a neighbor of the first access point; and
a communications unit, configured to send connection data of the first terminal to the second access point when a first terminal is connected to the first access point.

7. The apparatus according to claim 6, wherein the multiple access points further comprise a third access point, and in the roaming neighbor list, the third access point is not a neighbor of the first access point; and the apparatus further comprises:
a setting unit, configured to set the third access point in the roaming neighbor list as a neighbor of the first access point when a second terminal roams from the first access point to the third access point.

8. The apparatus according to claim 7, wherein the communications unit is further configured to send connection data of a terminal connected to the first access point to the third access point when the second terminal roams from the first access point to the third access point.

9. The apparatus according to any one of claims 6 to 8, wherein the roaming neighbor list further comprises an update time of each neighbor relationship between the multiple access points, and the apparatus further comprises:
an aging unit, configured to age, according to the update time, a neighbor relationship not updated for a long time.

10. The apparatus according to any one of claims 6 to 9, wherein the multiple access points further comprise a fourth access point, wherein in the roaming neighbor list, the fourth access point is a neighbor of the first access point; a connection database is further maintained, wherein the connection database further comprises terminal connection data stored in each access point of the multiple access points; and the apparatus further comprises:
a determining unit, configured to: when the first terminal is connected to the first access point, determine, according to the connection database, whether the fourth access point has stored the connection data of the first terminal; wherein
the communications unit is further configured to skip sending the connection data of the first terminal to the fourth access point when the fourth access point has stored the connection data of the first terminal; and
send the connection data of the first terminal to the fourth access point when the fourth access point has not stored the connection data of the first terminal.

11. A wireless local area network controller, comprising a processor, a memory, and a communications interface, wherein
the communications interface is configured to connect to multiple access points;
the memory is configured to store a roaming neighbor list maintained by the processor for the multiple access points;
the processor is configured to maintain the roaming neighbor list, for the multiple access points according to a roaming behavior of at least one terminal, wherein the multiple access points comprise a first access point and a second access point, and in the roaming neighbor list, the second access point is a neighbor of the first access point; and
the processor is further configured to send connection data of a first terminal to the second access point through the communications interface when the first terminal is connected to the first access point.

12. The wireless local area network controller according to claim 11, wherein the multiple access points further comprise a third access point, and in the roaming neighbor list, the third access point is not a neighbor of the first access point; and the processor is further configured to set the third access point in the roaming neighbor list as a neighbor of the first access point when a second terminal roams from the first access point to the third access point.

13. The wireless local area network controller according to claim 12, wherein the processor is further configured to send connection data of a terminal connected to the first access point to the third access point through the communications interface when the second terminal roams from the first access point to the third access point.

14. The wireless local area network controller according to any one of claims 11 to 13, wherein the roaming neighbor list further comprises an update time of each neighbor relationship between the multiple access points, and the processor is further configured to age, according to the update time, a neighbor relationship not updated for a long time.

15. The wireless local area network controller according to any one of claims 11 to 14, wherein the multiple access points further comprise a fourth access point, wherein in the roaming neighbor list, the fourth access point is a neighbor of the first access point; the memory further stores a connection database, wherein the connection database further comprises terminal connection data stored in each access point of the multiple access points; and
the processor is further configured to: when the first terminal is connected to the first access point, determine, according to the connection database, whether the fourth access point has stored the connection data of the first terminal, skip sending the connection data of the first terminal to the fourth access point through the communications interface when the fourth access point has stored the connection data of the first terminal, and send the connection data of the first terminal to the fourth access point through the communications interface when the fourth access point has not stored the connection data of the first terminal.
